(19) Europäisches Patentamt
European Patent Office
Office européen des brevets

(11) **EP 1 016 636 B1**

(12) **EUROPEAN PATENT SPECIFICATION**

(45) Date of publication and mention
of the grant of the patent:
**13.10.2004 Bulletin 2004/42**

(51) Int Cl.[7]: **C03B 37/018**

(21) Application number: **99125712.2**

(22) Date of filing: **23.12.1999**

(54) **Method for manufacturing optical fiber preform and method for manufacturing optical fiber**

Verfahren zum Herstellen einer Vorform für optische Fasern und Verfahren zur Herstellung von optischen Fasern

Procédé de fabrication d une preforme pour fibres optiques et procédé de fabrication d une fibre optique

(84) Designated Contracting States:
**DE FR GB**

(30) Priority: **28.12.1998 JP 37175498**

(43) Date of publication of application:
**05.07.2000 Bulletin 2000/27**

(73) Proprietor: **Hoya Corporation**
**Shinjuku-ku, Tokyo 161-0032 (JP)**

(72) Inventor: **Tanaka, Akiyoshi**
**Tama-shi, Tokyo 206-0025 (JP)**

(74) Representative:
**Werner, Hans-Karsten, Dr.Dipl.-Chem. et al**
**Patentanwälte**
**Von Kreisler-Selting-Werner**
**Postfach 10 22 41**
**50462 Köln (DE)**

(56) References cited:
**EP-A- 0 153 785**     **EP-A- 0 276 886**
**EP-A- 0 451 293**     **GB-A- 2 023 571**
**GB-A- 2 067 181**     **US-A- 4 952 225**

• **PATENT ABSTRACTS OF JAPAN vol. 8, no. 241, 6 November 1984 (1984-11-06) & JP 59 121129 A (FUJITSU LTD.), 13 July 1984 (1984-07-13)**
• **MORSE T.F. ET AL.: "AEROSOL TECHNIQUES FOR FIBER CORE DOPING" PROCEEDINGS OF THE OPTICAL FIBER COMMUNICATION CONFERENCE,US,NEW YORK, IEEE, vol. CONF. 14, 1991, page 63 XP000270360 ISBN: 1-55752-166-2**
• **KYUNGHWAN OH ET AL.: "SPECTROSCOPIC ANALYSIS OF A EU-DOPED ALUMINOSILICATE OPTICAL FIBER PREFORM" JOURNAL OF NON-CRYSTALLINE SOLIDS,NL,NORTH-HOLLAND PHYSICS PUBLISHING. AMSTERDAM, vol. 149, no. 3, 1 November 1992 (1992-11-01), pages 229-242, XP000309843 ISSN: 0022-3093**

## Description

## Background of the Invention

### 1. Field of the Invention

This invention relates to a method for manufacturing optical fiber preform employing an improved MCVD method in which light emitting substances (e.g., rare earth elements) are incorporated into a core layer by a spray method. The invention also relates to a method for manufacturing optical fiber containing rare earth elements or the like in which a fiber preform made by the above manufacturing method is used.

### 2. Description of Related Art

Optical fiber is composed of a core layer having a high refractive index and a cladding layer, an outer periphery, having a lower refractive index than the refractive index of the core layer to transmit light incident into the fiber through the core layer as reflected totally. The core layer may contain rare earth elements, depending on the use of the optical fiber. The optical fiber is generally manufactured by drawing an optical fiber preform. As a producing method for a preform of a quartz based optical fiber, a modified chemical vapor deposition (MCVD) method, an outside vapor-phase deposition (OVD) method, a vapor-phase axial deposition (VAD) method, and so on have been known. Optical fiber preforms being composed of a core layer having a high refractive index at a center portion and a cladding layer having a lower refractive index in comparison with the refractive index of the core layer are generally produced with one of the above methods.

In the case of the quartz based optical fiber, the essential component of any of the core layer and the cladding layer is silica glass ($SiO_2$). To increase the refractive index of the core layer, germanium (Ge) or the like is incorporated into the core layer, and to decrease the refractive index of the cladding layer, fluorine (F), boron (B), or the like is incorporated into the cladding layer. Phosphorus (P) may be added to decrease the glass transition temperature during manufacturing. As for quartz-based optical fibers for general optical telecommunication, optical fibers in which germanium capable of relatively raising the refractive index has been incorporated into the core layer are used only for the purpose of totally reflection of the transmitting light in the core layer. In optical fibers for fiber lasers and optical amplifiers, rare earth elements such as Pr, Yb, Nd, or Er have been incorporated into the core layer for the purpose to appendix new functions to the resultant optical fibers.

Those quartz-based optical fibers are manufactured using one of the above vapor phase deposition methods. However, in view of component-controlling easiness of deposited compounds by adjustments in time and zone in the gas flow amounts in a quartz tube, deposition controlling easiness done by tube surface temperature-controlling with an oxyhydrogen burner, and so on, the MCVD method is widely performed.

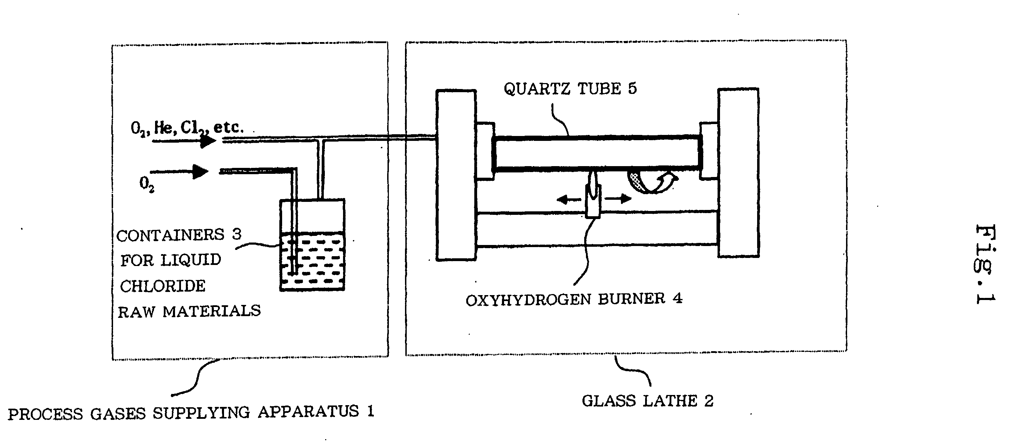

An outline of the method for manufacturing fiber preform by the MCVD method is as followed. Fig. 1 shows an entire schematic view of an MCVD apparatus. The MCVD apparatus is constituted of process gases supplying apparatus 1 and a glass lathe 2 to which a quartz tube 5 is attached. The process gases supplying apparatus 1 is installed with respective containers 3 filled with liquid chloride raw materials such as $SiCl_4$, $GeCl_4$, $POCl_3$, and source gases for processing are obtained by vaporizing the liquid raw materials through bubbling the liquids where oxygen gas is supplied in the containers 3. Those source gasses are supplied on the quartz tube 5 attached to the glass lathe 2 together with a carrier gas such as oxygen gas or the like. A heating source 4 such as an oxyhydrogen burner is arranged to the glass lathe so that the attached quartz tube can be heated up with flames from the exterior of the tube in an axial direction as the quartz tube rotates. In the quartz tube 5, the respective chloride source gases and oxygen gas thus supplied create thermal oxidizing reactions at a high temperature as indicated by, e.g., Formula (1) to produce oxide particles.

$$SiCl_4 + O_2 \rightarrow SiO_2 + 2Cl_2 \qquad (1)$$

The oxide particles thus produced are deposited as porous soot in the quartz tube. The deposited soot is heated up at a higher temperature to sinter the soot, thereby forming a transparent glass body. After those glass compositions are formed in the quartz tube, the hollow quartz tube is collapsed into a solid article by heating the glass body at a high temperature around a softening temperature of the quartz tube to produce a rod-shaped fiber preform.

With such a conventional MCVD method, to produce a fiber preform in which rare earth elements have been incorporated into the core layer, used are, e. g., a method for dipping a hollow quartz tube in a rare earth solution and a method for incorporating rare earth elements in the hollow quartz tube upon vaporizing the rare earth elements.

As a dipping method into a rare earth solution, known are, e.g., methods described in Japanese Unexamined Patent Publication Heisei No. 5-330,842 and in Japanese Unexamined Patent Publication Heisei No. 9-142,866. Any of those is a method in which after the porous core layer is formed on the inner wall of the quartz tube, solution dipping is made by flowing a prescribed solution such as an alcohol or the like containing rare earth elements, and then the rare earth elements are incorporated into the porous core layer where the tube interior is dried as a chlorine gas and the like is flown to evaporate the solvent.

In a meanwhile, the method for vaporizing rare earth elements has been proposed in, e.g., Journal of American Ceramic Society Vol. 73, No. 12 (1990) p. 3537-3556 and Japanese Unexamined Patent Publication Heisei No. 9-25,135. A representative method is illustrated based on Fig. 2. A portion filled with powders 6 containing rare earth elements is formed in the quartz tube 9 as separated from the normal preform forming portion, and a vapor of the rare earth elements is generated by heating the powder portion at a high temperature with an oxyhydrogen burner 7 from the outside of the tube to supply gases together with the carrier gas such as oxygen to the preform forming portion. Consequently, the rare earth elements are deposited at the fiber preform portion to produce a core 10 containing the rare earth elements. In this method, a heating source 7 thermally controllable is separately required in addition to the normal heating source (oxyhydrogen burner) 8 for depositing preform.

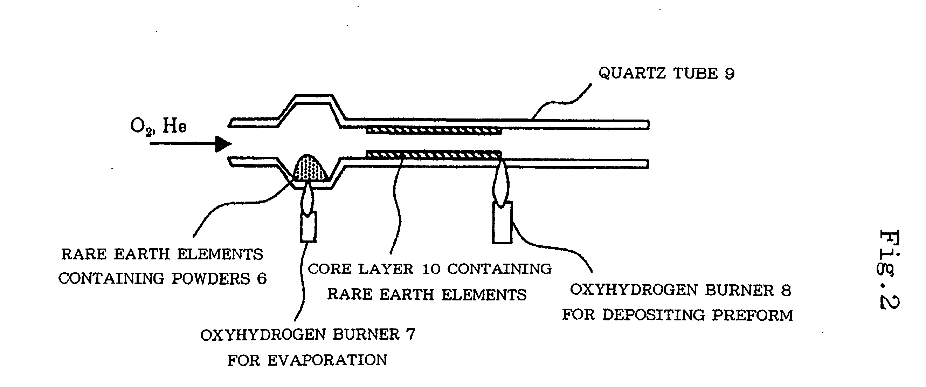

With methods for incorporating the rare earth elements, the incorporation is made by means of solutions or vapor-phase. In the method by means of vapor-phase, no vaporized gas is obtained unless heated up at about 600 °C or higher in the case that the powders containing the rare earth elements are of rare earth chlorides. Accordingly, another thermally controllable heating source is separately required in addition to the normal heating source (oxyhydrogen burner) for depositing preform as shown in Fig. 2. As a result, this method disadvantageously makes the structure of the MCVD apparatus complicated.

As a device to improve this point, a method using rare earth chelate compounds having a low vaporizing temperature of about 200 °C or less, as shown in Japanese Unexamined Patent Publication Heisei No. 9-25,135, has been proposed. Where a material readily vaporized is employed, the apparatus can be arranged in avoiding a complicated structure. However, those chelate compounds are so special and very expensive and raise problems such that controlling of the reactions is not easy because the compounds are unstable.

In a meantime, with the method for incorporation using a solution, the quartz tube is necessarily detached from the glass lathe during the process after the porous core layer is formed inside the quartz tube. A previously prepared solution containing rare earth compounds is filled in the detached quartz tube, and the quartz tube is attached to the lathe again upon removal of the solution after the porous portion has been dipped in the solution. The solvent of the solution remaining inside the tube is dried and removed by heating the tube in flowing a chlorine gas in the tube. Thus, in the conventional solution dipping method, extra steps such that the quartz tube is detached from the glass lathe are required to incorporate rare earth materials, thereby rendering the manufacturing method complicated.

In a method as described in Japanese Unexamined Patent Publication Heisei No. 9-142,886, as shown in Fig. 3, a solution is poured in the quartz tube 12 having the cladding layer 11 and the porous core layer 10 by inserting a tube 13 into the quartz tube while the quartz tube is attached. The poured solution is prevented from spilling by recesses formed on front and back sides on the produced preform in advance, and after the solution is poured in a certain amount, the tube inside is dried in a normal manner. However, this method also raises a problem, in terms of dipping in a solution, that the steps become complicated in the same way as the general method. Further, with those solution-dipping methods, the dipping amount in any method can hardly be controlled. Particularly, with the latter solution pouring method, a liquid may be locally gathered, and there raise problems that uniform addition of the solution may be difficult in the porous core layer or that excessive addition of rare earth elements to the porous layer may be easily occurred. Furthermore, there raises a problem that the method produces much waste because the prepared solution amount or the solution amount used for dipping is much more than those actually used for solution addition to the porous core.

The techniques of forming cladding layers fusing modified chemicat vapour deposition (MCVD) and forming core layers using aerosol deposition are disclosed in Kyunghwan Oh et al.: "Spectroscopic Analysis of a Eu-doped aluminosilicate optical fiber preform", Journal of Non-Crystalline Solids, North-Holland Physics Publishing, Amsterdam, NL, vol. 149, no. 3, Novermber 1, 1992, p. 229-242

European Patent Application EP 0 451 293 A1 discloses a process for fabricating an optical fiber preform whose core is doped with a rare earth element (or ion). This process comprises the steps of forming a soot-like core glass by heating fine powder of an oxide glass deposited by vapour phase reaction in a quartz reaction tube, spraying an atomized solution of a compound of a rare earth element used as a solute against the soot-like core glassthereby permitting the solution to be impregnated in the soot-like core glass, heating the sotute-coritaining soot-like core glass until the glass is vitrified, and heating the quartz reaction tube for collapsing.

UK Patent Application GB 2 067 181 A discloses a process for the production of a preform with a view to obtain an optical fiber with index jump or gradient by forming layers of doped transparent substance on the surface of an elongated substrate made of the substance in the pure or doped state. The solution of said substance is spread on the substrate which is simultaneously rotated about its axis at high speed in order to distribute the solution evenly over the surface of the substrate. The substrate is subsequently heated to cause the evaporation of the solvent, leaving on the substrate a layer which is densified by heat treatment.

It is an object of the invention to provide a method for manufacturing optical fiber preform comprising a core glass containing light emitting substances and a cladding glass, and namely to provide a method easily controlling addition amounts of the light emitting substances without requiring any complicated step. In Addition, it is another object of the invention to provide a method for manufacturing an optical fiber utilizing the optical fiber preform thus obtained by the above method.

**Summary of the Invention**

The invention relates to a method for manufacturing optical fiber preform having a core glass containing at least one light emitting substance and a cladding glass, comprising the steps of: forming a porous layer made of a precursor of the core glass on the inner surface of a hollow tube, at least the inner surface being made of the cladding glass; spraying a liquid containing the light emitting substance onto the porous layer, whereby the liquid containing the light emitting substance is fed directly to the tip of a nozzle inserted into the hollow tube and sprayed from around the tip wherein the tip travels correlatively to the hollow tube ; forming a layer of the core glass containing the light emitting substance by sintering the porous layer containing the light emitting substance; and forming a preform rod by making the obtained hollow tube into a solid article.

**Brief Description of the Drawings**

The above and other objects and features of the invention are apparent to those skilled in the art from the following preferred embodiments thereof when considered in conjunction with the accompanied drawings, in which:

Fig. 1 is an illustration showing the whole outline of an MCVD apparatus;
Fig. 2 is an illustration showing a method for adding rare earth elements by a vapor-phase method;
Fig. 3 is an illustration showing a method for adding rare earth elements by a liquid solution method;
Fig. 4(a) to 4(e) are illustrations showing the method of the invention;
Fig. 5(a) and 5(b) are graphs showing measured results of Nd concentration profiles along the cross sections of optical fibers; and
Fig. 6 is a schematic view showing a fiber drawing apparatus.

**Detailed Description of the Preferred Embodiments**

According to the method of the invention, rare earth elements are added to a porous core layer by spraying solutions containing rare earth elements. This step simplifies the production steps and makes possible uniform incorporation of the rare earth elements into the porous layer.

The method of the invention is a method for manufacturing optical fiber preform comprising a core glass containing light emitting substances and a cladding glass.

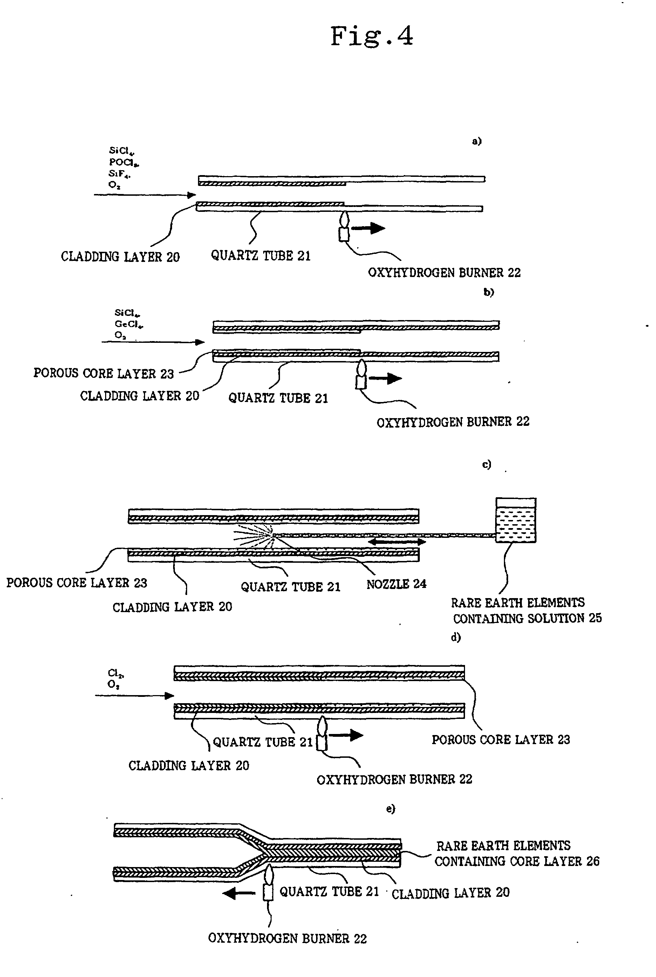

With this method, first of all, a porous layer made of a precursor of the core glass is formed on an inner surface of a hollow tube. At least the inner surface of the hollow tube is made of a cladding glass. More specifically, for example, as shown in Fig. 4(a), a quartz tube 21 is attached to a glass lathe, not shown; process gases such as $SiCl_4$, $SiF_4$, $POCl_3$ or the like are supplied together with an oxygen gas into the quartz tube and heated with an oxyhydrogen burner 22 from an outside of the quartz tube, thereby depositing the glass cladding layer 20. As shown in Fig. 4(b), gases of $SiCl_4$ and $GeCl_4$ are supplied together with an oxygen gas to the surface of the cladding layer, and a porous core layer 23 is formed on the surface of the cladding layer 20 by heating the surface at a temperature slightly lower than the temperature at which deposited materials become transparent glass bodies. According to the method of the invention, the cladding glass formed on the inner surface of the hollow tube may be a cladding glass layer formed by an MCVD method on the inner surface of the quartz tube, and the porous layer made of a precursor of the core glass may contain $SiO_2$ and $GeO_2$.

Subsequently, a light emitting substance or a medium containing the light emitting substance is sprayed onto the porous layer (porous core layer) 23. The light emitting substance can be, e.g., rare earth ions. For example, as shown in Fig. 4(c), where a tube having a nozzle 24 is inserted into the quartz tube 21, an alcohol or water solution 25 containing a prescribed compound including rare earth elements such as erbium chloride ($ErCl_3$), ytterbium chloride ($YbCl_3$), neodymium chloride ($NdCl_3$), or the like is fed by a liquid feeding pump, thereby forming spray-formed liquid in the quartz tube to uniformly add the liquid to the porous core layer. At that time, it is preferred to add to the solution some aluminum (Al) ions as aluminum chloride ($AlCl_3$) that has a preventive effect against clustering of the rare earth ions in the core. An amount of the solution to be fed is determined in view of the thickness (Tp) of the formed porous layer, the inner diameter (Id) and the length (L) of the used quartz tube, and the actual volume (V) of the deposited porous layer indicated by Formula (2) can be fed.

$$V = (Id - Tp)\, Tp\pi L \qquad (2)$$

For example, where the thickness of the porous layer is equal to 100 microns, where the inner diameter of the quartz tube is equal to 20 mm, and where the length of the tube is 1 m, the solution volume V is as follows.

$$V = (20 - 0.1) \times 0.1 \times \pi \times 1000 \cong 6250 = 6.25\ (ml)$$

To evenly add substances to the core layer, during spraying of the solution, the quartz tube is rotated, and the spraying nozzle is moved horizontally along the tube to render uniform addition in the axial direction of the tube. An amount of the light emitting substances deposited can be made constant by making constant the spraying amount and traveling velocity of the nozzle during traveling of the nozzle. Alternatively, during traveling of the nozzle, the amount of the deposited light emitting substances can be varied by changing the spraying amount and/or traveling velocity of the nozzle. Subsequently, as shown in Fig. 4(d), the spraying device is removed from the quartz tube, and the oxyhydrogen burner 22 can dry the interior of the tube uniformly in supplying the chlorine gas into the tube. The light emitting substance sprayed is not limited to a liquid, and can be in any form able to be sprayed, e.g., fine powders.

Subsequently, a core glass layer containing the light emitting substances is formed by sintering the porous layer containing the light emitting substances. For example, after the drying step, the porous core is sintered by heating the layer up to a further higher temperature as shown in Fig. 4(d), thereby forming a transparent glass body.

. Then, the obtained hollow tube is collapsed into a solid article, as shown in Fig. 4(e), to manufacture a fiber preform having a core glass layer 26 containing the light emitting substances.

In the described method, additions of the rare earth solution to the porous layer are made by spraying as shown in Fig. 4(c) depicting the method. This allows uniform additions to the porous core layer in comparison with the conventional solution dipping method because, e.g., no local gather of the liquid is occurred. Since the light emitting substances are added by spraying, the used amount of the solution can be minimized, so that there is an advantage that no layer containing an excessive amount of rare earth elements is formed. There is also an advantage that this can eliminate a step for detaching the quartz tube from the glass lathe portion of the MCVD apparatus, and therefore, the process can be advantageously simplified.

[Manufacturing Method of Optical Fiber]

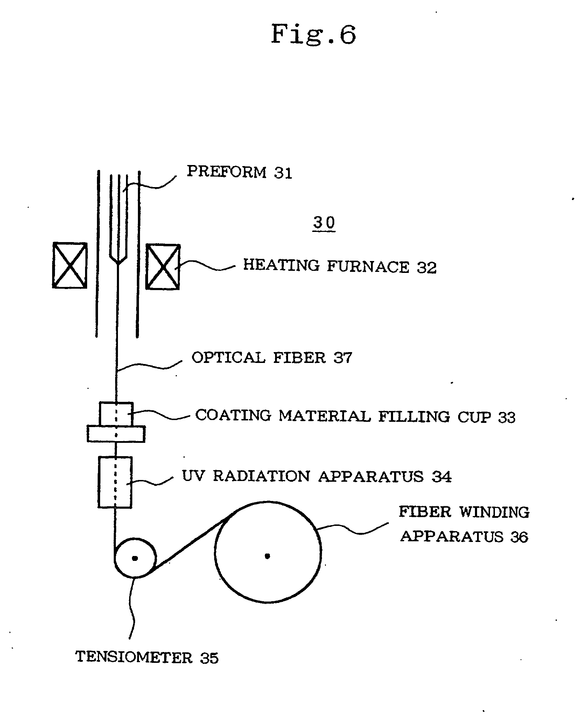

The preform thus obtained in the above method can be made into a fiber using a fiber drawing apparatus. For example, a fiber drawing apparatus 30 shown in Fig. 6 is a tower in which a preform 31 secured to a securing portion, not shown, from an upper portion, a heating furnace 32, a coating material filling cup 33, an UV radiation apparatus 34, a tensiometer 35, and a fiber winding apparatus 36 are arranged in this order. The quartz preform (to which rare earth elements are added) produced by the method according to the invention is attached to a securing portion for preform, and a tip of the preform is inserted in the heating furnace and heated up, thereby producing a fiber 37 upon dropping of the preform tip by gravity. The fiber is coated by means of the dropping fiber 37, the coating material filling cup 33 in which an UV curing resin is poured, and the UV radiation apparatus 34. The obtained fiber 37 is wound at the winding apparatus 36 in controlling the fiber tension, the fiber winding speed, and the insertion speed of the preform into the heating furnace.

[Examples]

The invention is further described using Examples in detail.

Example 1

A quartz tube having an outer diameter of 25 mm, an inner diameter of 21 mm, and a length of 1 m, as a start tube, was set to an MCVD apparatus. The followings are fabricating steps.

1) After supplying a $C_2F_6$ gas in the quartz tube, the tube was heated at around 1500 °C with an oxyhydrogen burner, and was cleaned with etching of the interior of the quartz tube.
2) Where gases of $SiCl_4$, $SiF_4$, and $O_2$ were flown in the quartz tube, the cladding layer was deposited at around 1600 °C.
3) Where gases of $SiCl_4$, $GeCl_4$, and $O_2$ were flown in the quartz tube, the porous core layer was deposited at around 1300 °C.
4) A liquid in which neodymium chloride ($NdCl_3 \cdot 6H_2O$) of 0.015 mol and aluminum chloride ($AlCl_3$) of 0.5 mol were solved in an ethanol of one liter was prepared.
5) A tube having a spraying nozzle was inserted into the quartz tube in which the porous core layer as described in 3) was formed, and the solution was fed at a spraying rate of 7 (cc)/min. After the spraying nozzle was moved reciprocally for one minute in the quartz tube, the supply of the liquid was stopped, and the nozzle was taken out of the quartz tube.
6) The tube was dried by repeating burner heating at around 1000 °C in supplying $Cl_2$ gas in the quartz tube.
7) Where an $O_2$ and He gas was supplied in the quartz tube, the core layer was sintered at around 1800 °C to be a transparent glass body.
8) where an $O_2$ gas was flown, the quartz tube was collapsed into a solid article by heating the tube at a high temperature around 2000 °C, thereby forming a preform rod.

The obtained preform was made into a fiber by means of a fiber drawing apparatus (see, Fig. 6). The fiber drawing apparatus was a tower in which a portion for securing a preform, a heating furnace, a coating material filling cup, an UV radiation apparatus, a tensiometer, and a fiber winding apparatus were arranged in this order from the upper side. A produced quartz preform into which rare earth elements are incorporated was attached to the portion for securing a preform, and the tip was inserted into the heating furnace to heat up the preform. The preform tip was dropped by gravity where heated at around 1800 °C, thereby producing a fiber having 125 μm in diameter. A coating material filling cup having an opening of 400 μm in diameter was subsequently attached, and after an UV curing resin is poured in the cup, the UV radiation apparatus coated the fiber. The obtained fiber was secured to the winding apparatus, a fiber having a length of 1 km was produced so that the fiber before coated keeps the diameter of 125 μm in diameter as controlling the fiber tension, the fiber winding speed, and the inserting speed of the preform into the heating furnace

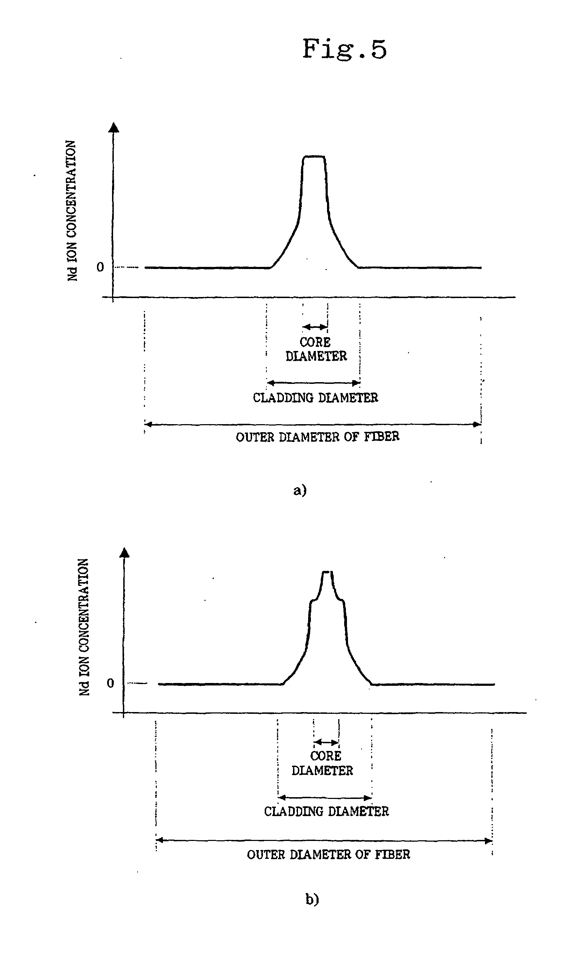

. Fig. 5(a) shows measured results of the Nd concentration profile in the fiber cross section of the fiber thus obtained. It was confirmed that Nd ions are incorporated into the core layer uniformly. Because ions are diffused into the formed cladding layer, the Nd concentration is widened more or less at the boundaries between the cladding layer and core layer.

Comparative Example 1

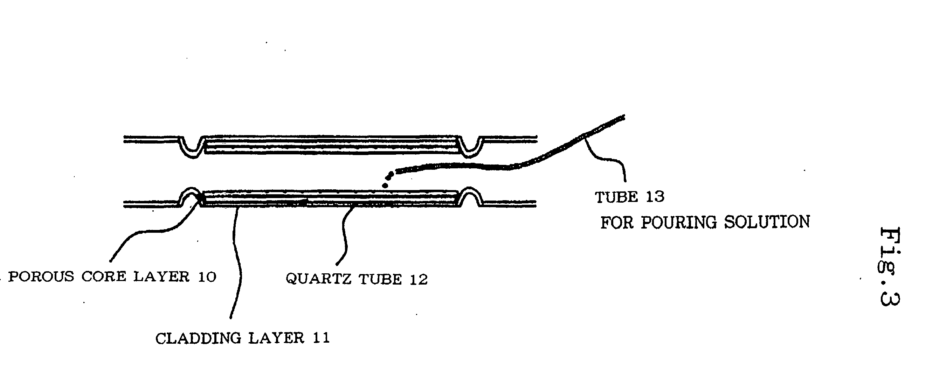

A quartz tube having an outer diameter of 25 mm, an inner diameter of 21 mm, and a length of 1 m, as a start tube, was set to an MCVD apparatus in substantially the same way as Example 1. An etching process, a cladding layer depositing process, and a porous core layer depositing process were made in the same manner as steps 1 ) to 3 ) in Example 1 until the porous core layer depositing process. Subsequently, recesses as shown in Fig. 3 were formed by heating with an oxyhydrogen burner both ends of the quartz tube to prevent liquid from leaking.. In the quartz tube thus fabricated, an ethanol solution of one liter with previously prepared neodymium chloride ($NdCl_3 \cdot 6H_2O$) of 0.015 mol and aluminum chloride ($AlCl_3$) of 0.5 mol were poured by a tube as shown in Fig. 3. After supplying the liquid adequately in the quartz tube, the tube was removed from the quartz tube. Subsequently, a drying process, a sintering process, and a process for making into a solid article were made in substantially the same manner as steps 6) and 7) of Example 1 to produce a preform rod.

Fig. 5(.b) shows measured results of the Nd concentration profile in the fiber cross-section of the fiber thus obtained. It was confirmed that although Nd ions are incorporated into the core layer, the concentration was very high at a center of the core portion, which indicated unevenness of the Nd concentration in the core layer. This was caused by left over of the excessive Nd solution at the surface of the porous core with a high concentration when the solution was added in the quartz tube.

According to the method for manufacturing optical fiber preform of the invention the addition amount of the light emitting substances in the core glass containing the light emitting substances can be easily controlled without requiring any complicated steps.

Moreover, the invented method enables to manufacture an optical fiber with a core uniformly containing the light emitting substances and having profile of the light emitting substances by utilizing the optical fiber preform obtained by the method described above.

The foregoing description of preferred embodiments of the invention has been presented for purposes of illustration and description, and is not intended to be exhaustive or to limit the invention to the precise form disclosed. The description was selected to best explain the principles of the invention and their practical application to enable others skilled in the art to best utilize the invention in various embodiments and various modifications as are suited to the particular use contemplated. It is intended that the scope of the invention should not be limited by the specification, but be defined by the claims set forth below.

**Claims**

1. A method for manufacturing optical fiber preform comprising a core glass containing at least one light emitting substance and a cladding glass, comprising the steps of:

   forming a porous layer made of a precursor of the core glass on the inner surface of a hollow tube, at least the inner surface being made of the cladding glass;
   spraying a liquid containing the light emitting substance onto the porous layerwhereby the liquid containing the light emitting substance is fed directly to a tip of a nozzle inserted into the hollow tube and sprayed from around the tip therein the tip travels corretatively to the hollow tube;
   forming a layer of the core glass containing the light emitting substance by sintering the porous layer containing the light emitting substance; and
   forming a preform rod by collapsing the obtained hollow tube into a solid article.

2. A method for manufacturing optical fiber for obtaining an optical fiber by heating and spinning the optical fiber preform obtained by the manufacturing method according to claim 1.

**Patentansprüche**

1. Verfahren zur Herstellung eines Vorformlings für eine optische Faser mit einem Kernglas, das wenigstens eine lichtemittierende Substanz enthält, und einem Hüllglas, wobei das Verfahren die folgenden Schritte umfasst:

Bilden einer porösen Schicht aus einer Vorstufe des Kernglases auf der inneren Oberfläche eines hohlen Rohrs, wobei wenigstens die innere Oberfläche aus dem Hüllglas besteht;

Aufsprühen einer Flüssigkeit, die die lichtemittierende Substanz enthält, auf die poröse Schicht, wobei die Flüssigkeit, die die lichtemittierende Substanz enthält, direkt einer Spitze einer Düse, die in das hohle Rohr eingesetzt wird, zugeführt und aus der Spitze heraus aufgesprüht wird, wobei sich die Spitze gegenüber dem hohlen Rohr bewegt;

Bilden einer Schicht aus dem Kernglas, das die lichtemittierende Substanz enthält, durch Sintern der porösen Schicht, die die lichtemittierende Substanz enthält; und

Bilden eines stabförmigen Vorformlings, indem man das erhaltene hohle Rohr zu einem massiven Gegenstand zusammenzieht.

2. Verfahren zur Herstellung einer optischen Faser zur Gewinnung einer optischen Faser durch Erhitzen und Verspinnen des Vorformlings für die optische Faser, der durch das Herstellungsverfahren gemäß Anspruch 1 erhalten wurde.

**Revendications**

1. Un procédé pour fabriquer une préforme de fibre optique comprenant un verre de coeur renfermant au moins une substance émettrice de lumière et un verre de gainage, comprenant les opérations consistant :

à former une couche poreuse constituée d'un précurseur du verre de coeur sur la surface intérieure d'un tube creux, la surface intérieure au moins étant constituée du verre de gainage ;
à pulvériser un liquide contenant la substance émettrice de lumière sur la couche poreuse, le liquide renfermant la substance émettrice de lumière se trouvant amené directement à une extrémité d'une buse insérée dans le tube creux et pulvérisé depuis le pourtour de l'extrémité, l'extrémité se déplaçant relativement au tube creux ;
à former une couche du verre de coeur renfermant la substance émettrice de lumière par frittage de la couche poreuse renfermant la substance émettrice de lumière; et
à former une tige de préforme par rétraction du tube creux obtenu en un article plein.

2. Un procédé de fabrication d'une fibre optique pour obtenir une fibre optique par chauffage et filage de la préforme de fibre optique obtenue par le procédé de fabrication de la revendication 1.

Fig. 1

O₂, He, Cl₂, etc.

O₂

QUARTZ TUBE 5

CONTAINERS 3
FOR LIQUID
CHLORIDE
RAW MATERIALS

OXYHYDROGEN BURNER 4

PROCESS GASES SUPPLYING APPARATUS 1

GLASS LATHE 2

Fig.2

QUARTZ TUBE 9

OXYHYDROGEN BURNER 8
FOR DEPOSITING PREFORM

CORE LAYER 10 CONTAINING
RARE EARTH ELEMENTS

OXYHYDROGEN BURNER 7
FOR EVAPORATION

RARE EARTH ELEMENTS
CONTAINING POWDERS 6

O₂, He

Fig. 3

TUBE 13
FOR POURING SOLUTION

POROUS CORE LAYER 10

QUARTZ TUBE 12

CLADDING LAYER 11

# Fig.4

a)

SiCl₄,
POCl₃,
SiF₄,
O₂

CLADDING LAYER 20        QUARTZ TUBE 21

OXYHYDROGEN BURNER 22

b)

SiCl₄,
GeCl₄,
O₂

POROUS CORE LAYER 23

CLADDING LAYER 20        QUARTZ TUBE 21

OXYHYDROGEN BURNER 22

c)

POROUS CORE LAYER 23

CLADDING LAYER 20        QUARTZ TUBE 21        NOZZLE 24

RARE EARTH ELEMENTS
CONTAINING SOLUTION 25

d)

Cl₂,
O₂

QUARTZ TUBE 21                POROUS CORE LAYER 23

CLADDING LAYER 20

OXYHYDROGEN BURNER 22

e)

RARE EARTH ELEMENTS
CONTAINING CORE LAYER 26

QUARTZ TUBE 21    CLADDING LAYER 20

OXYHYDROGEN BURNER 22

# Fig.5

a)

b)

# Fig.6

PREFORM 31

30

HEATING FURNACE 32

OPTICAL FIBER 37

COATING MATERIAL FILLING CUP 33

UV RADIATION APPARATUS 34

FIBER WINDING
APPARATUS 36

TENSIOMETER 35